# EUROPEAN PATENT APPLICATION

(11) **EP 4 636 370 A1**
(43) Date of publication of application: **22.10.2025**
(21) Application number: 24170385.9
(22) Date of filing: 16.04.2024
(51) Int. Cl.: G01K 7/42, H02P 29/60, H02P 23/00, G06F 30/27, B60L 50/00, G06N 3/084, G06N 3/0985

(54) **METHODS AND MEANS FOR ESTIMATING TEMPERATURES OF A MACHINE**

(71) Applicant: ABB SCHWEIZ AG, 5400 Baden (CH)
(72) Inventor: KAKOSIMOS, Panagiotis, 723 58 Västerås (SE); NORDLUND, Erik, 722 44 Västerås (SE); RÖNNBERG, Kristian, 731 91 Köping (SE); KOLONDJOVSKI, Zlatko, 01450 Vantaa (FI)
(74) Representative: Kransell & Wennborg KB

(57) **Abstract**

A method is disclosed for estimating internal temperatures of a machine using a thermal digital twin that replicates a temperature sensor of the machine. The method comprises recording temperature values received from one or more temperature sensors of the machine while operating the machine under at least two different operating conditions; capturing one or more operating point parameters for each of the different operating conditions; and obtaining a base thermal model for the thermal digital twin by training the thermal machine learning model using the recorded temperatures and the captured one or more operating point parameters, the training further comprising using input from a self-tuning analytical model. A device, use of the device, a computer program and computer program product are also disclosed.

## Description

### TECHNICAL FIELD

The technology disclosed herein relates generally to the field of monitoring condition of machines, and in particular to methods and means for estimating temperatures of machines.

### BACKGROUND

A digital twin is a digital model designed to accurately reflect a physical object, e.g. a machine, product, or system. The physical object may be provided with various sensors that measure vital parameters thereof. For example, a thermal digital twin runs in parallel with a real thermal component and updates its parameters based on field measurements received from the real thermal component. The thermal digital twin requires a model describing the thermal behavior of the thermal component. This model, which may be of any type such as, e.g. network-based, or finite elements, has to be of high accuracy since future predictions rely heavily on its current output. However, this requires real-time knowledge of power losses, but such knowledge is not always feasible in practice. The power losses have to be estimated by employing another digital twin that inputs the operating point characteristics. The combination of two digital twins increases the complexity and the required hardware resources.

Development of digital twins is an important aspect of today's powertrains. The thermal digital twins offer a multi-faceted contribution to advanced condition monitoring of the powertrain. For example, by means of the digital twin, users may be notified when the real thermal component significantly deviates from its anticipated temperature, signaling an imminent failure or overloading conditions.

Further, the temperature is an indicator of the expected lifetime of almost all components of the powertrain. Many thermal digital twins exist for predicting the future behavior of a machine. Different modeling approaches may be used, but the main target is typically the same: the prediction of the machine temperatures and/or the updating of the twin parameters for improving future predictions. However, a digital twin, or even a conventional simulation model, necessitates the knowledge of the power losses being represented as heat sources in the model. The power losses are not always known, and there is often an inherent difficulty in estimating them.

The parameters related to the operating condition are usually uploaded to a cloud service, and the thermal digital twin is therefore coupled with an electromagnetic model for inputting the estimated power losses. This adds to the complexity and also cost of the system as there is a need for additional hardware resources. Further, the two digital twins must be of high accuracy, and their development usually involves manual operations and testing. Further still, a change in the real target may invalidate the digital twins, thus requiring the repetition of the entire development process. This is a time-consuming process and requires humans to maintain the digital twins or supervise their behavior. It is clear that there is a need for improvements in these regards.

### SUMMARY

An objective of embodiments herein is to address and improve various aspects relating to digital twins. A specific objective is to reduce complexity of systems involving digital twins. Another objective is to provide a more cost-efficient system for digital twins. These objectives and others are achieved by the method, device, computer program and computer program product according to the appended independent claims, and by the embodiments according to the dependent claims.

According to a first aspect, a method for estimating internal temperatures of a machine is provided. For this estimation, a thermal digital twin replicating a temperature sensor of the machine is used. The method is performed in a device, for instance a cloud node or a server, and comprises recording temperature values received from one or more temperature sensors of the machine while operating the machine under at least two different operating conditions. The method further comprises capturing one or more operating point parameters for each of the different operating conditions. A base thermal model is obtained for the thermal digital twin by training the thermal machine learning model by using the recorded temperatures and the captured one or more operating point parameters. The training further comprises using input from a self-tuning analytical model.

According to a second aspect, a device is provided for estimating internal temperatures of a machine by using a thermal digital twin that replicates a temperature sensor of the machine. The device is configured to: record temperature values received from one or more temperature sensors of the machine, while operating the machine under at least two different operating conditions; capture one or more operating point parameters for each of the different operating conditions; and obtain a base thermal model for the thermal digital twin by being configured to train a thermal machine learning model by using the recorded temperatures and the captured one or more operating point parameters, and further being configured to train by using input from a self-tuning analytical model.

According to a third aspect, use of device according to the second aspect is made for alerting a user of the machine on any deviation from anticipated temperatures.

According to a fourth aspect, a computer program is provided for generating a thermal digital twin replicating a temperature sensor of a machine. The computer program comprises computer code which, when run on processing circuitry of a device causes the device to perform a method according to the first aspect.

According to a fifth aspect a computer program product comprising a computer program according to the fourth aspect is provided, and a computer readable storage medium on which the computer program is stored.

These aspects enable a reduction of required computational resources, while still providing an improved accuracy. These aspects enable a reduced cost as well as reduced complexity. The method may be used without requiring the use of real-time knowledge on power losses, which renders the method more cost-efficient and also reduces complexity of the temperature detection compared to prior art. Further, by using inputs from the self-tuning analytical model the need for adding new sensing devices can be avoided. A reduced number of sensing devices are thus required, which gives lowered costs. Still further, the herein provided digital twin can adapt without manual intervention, which gives a high efficiency and reduces costs.

Further objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc. unless explicitly stated otherwise. The actions of any method disclosed herein do not have to be performed in the exact order disclosed, unless explicitly stated.

### BRIEF DESCRIPTION OF THE DRAWINGS

The inventive concept is now described, by way of example, with reference to the accompanying drawings.
Fig. 1 is a schematic diagram illustrating a machine and a device according to embodiments.
Fig. 2 is a flowchart of various embodiments of a method.
Fig. 3 is a schematic diagram showing functional units of a device according to an embodiment.
Fig. 4 is a schematic diagram showing functional modules of a device according to an embodiment.
Fig. 5 shows one example of a computer program product comprising computer readable means according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any action or feature illustrated by dashed lines should be regarded as optional.

Briefly, methods and means are provided for estimating internal and/or external temperatures of a machine, e.g. a motor, by using a thermal digital twin that replicates a temperature sensor. The estimation of internal temperatures is valuable, for instance, for estimating a remaining lifespan of a component. A more abstract and independent solution is needed in order to reduce both costs and complexity of digital twins; this is particularly the case for a large fleet of machines. In order to meet these and other needs, a machine learning approach is suggested herein, e.g. using a neural network. This offers a much-needed flexibility: instead of maintaining two models of high accuracy, that is, one model for each digital twin in the pair of digital twins, the use of machine learning is suggested. The term "machine learning" may be understood as a computer's (or other device) ability to learn without being explicitly programmed. This development of a machine learning model (e.g. a neural network-based model) for the thermal digital twin, enables to directly relate an operating point with a thermal behavior of a machine. Data collected at a commissioning stage and/or during the system operation may be used for training the model and for keeping it up to date.

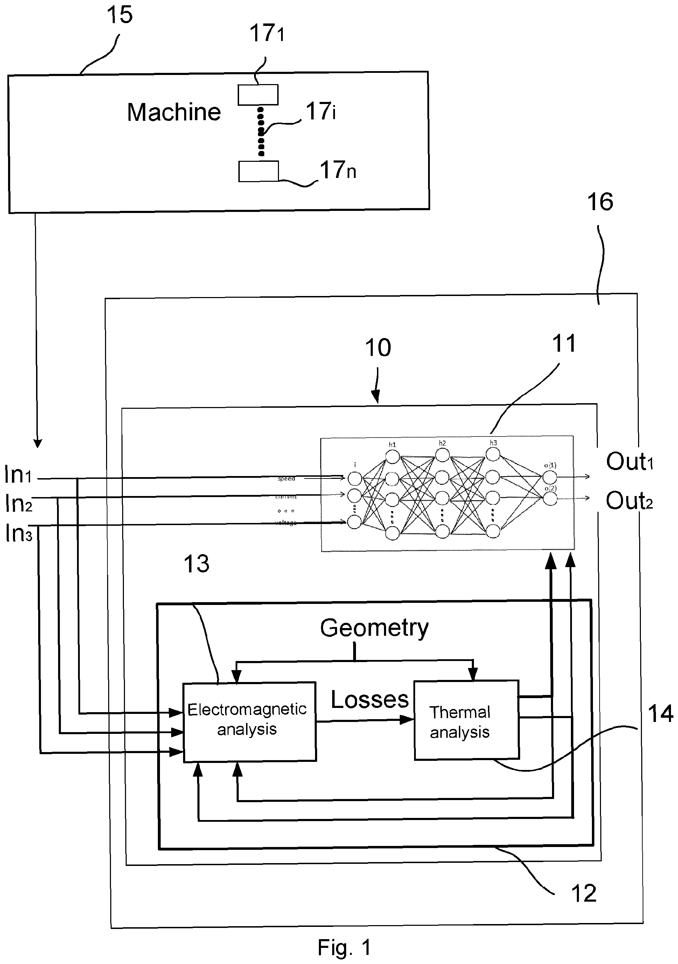

**Fig. 1** is a schematic diagram illustrating a machine 15 and a device 16 according to various embodiments. The machine 15 may, for instance, be an electric motor, or a component of an electric powertrain. The machine 15 comprises a number of temperature sensors or temperature detectors 17₁, 17₂,..., 17ᵢ,.., 17ₙ, arranged at various places in and/or around the machine 15. The temperature sensors 17ᵢ are used for field measurements, i.e. measuring the temperature at various places in, on and/or close to the machine 15.

Operating point parameters such as e.g. speed, current, and temperature of the machine 15 are input In1, In2, In3 to a machine learning model 11 comprising multiple layers and nodes. These operating point parameters are also input to a self-tuning analytical model 12. The self-tuning analytical model 12 comprises an electromagnetic analysis means 13 and a thermal analysis means 14. As noted earlier, an example of such machine learning model 11 that may be used for implementing the present teachings is a neural network. The operating point parameters may, for instance, be provided by a drive if the motor is provided with one. As another example the operating point parameters may be supplied by a network grid, in which case additional devices are involved for obtaining the parameters.

While prior art uses a self-tuning analytical model that receives input from the machine at hand, the present teachings introduce a machine learning model 11 as a link between the electromagnetic analysis 13 and thermal analysis 14 of the self-tuning analytical model 12. Stated differently, the link between the electromagnetic analysis 13 and thermal analysis 14 is replaced by the abstract nature of the machine learning model 11 and its hidden layers.

For implementing such a digital twin 10 in practice, a base machine learning model 11 is created for each machine instance, e.g., for temperature sensors 17₁,..., 17ᵢ,.., 17ₙ. The machine instance may be created at the commissioning stage, where there is a possibility to add more temperature sensors (and/or other types of sensors) to the machine 15 in the case that it is not equipped with ones. The temperature may be sensed internally or only externally or both. Further, different operating points may be tested for each machine type, and not necessarily for each machine instance. One particular machine type may be such that it always exhibits a similar thermal behavior, in which case it may be accurately represented by one generalized base digital twin. Simulation results may be used for complementing the development of a base digital twin. Additionally, it is possible to create the base machine learning model 11 while following a certain power cycle as requested (e.g. at the request of a customer).

When the machine 15 is in use in the field, there may be a need for some temperature feedback along with the operating point parameters. However, it is not necessary to obtain feedback from all the temperature sensors 17₁,..., 17ᵢ,.., 17ₙ, that are used in the training phase, instead only a part of them may be used. After such initial training phase there are several possible methods to update the machine learning model 11 partially. This updating, or training, of the machine learning model 11 may, for instance, be performed by back propagation, i.e. by using a gradient estimation method. The back propagation may be used for updating only those layers that are related to any known output. In this way, the whole structure of the machine learning model 11 is updated, thus improving the estimation of non-measured output temperatures. The machine learning model 11 is in addition trained by using input from the electromagnetic analysis 13 and the thermal analysis 14 of the self-tuning analytical model 12.

The machine 15, e.g. electric motor, comprises standard embedded temperature detectors for capturing internal and/or external temperatures. The operating point parameters, e.g. current, speed, etc. are transmitted to the device 16, e.g., available in a cloud environment, along with the temperatures. This transmission may be done e.g. through drives, a Bluetooth gateway etc.

Next, a number of exemplary execution steps of the herein provided method are described using an electric motor as example on a machine, which electric motor is fed by an electric drive. This is only a particular example, and it is noted that the teachings are applicable to various types of configurations. The machine learning model 11 may, for instance, be a neural network, but various other machine learning models could be used instead.

STEP 1: A base thermal model is created by using a machine learning model 11, such as a neural network. An automatic machine learning method (e.g. AutoKeras) may be used for defining the structure of the machine learning model 11.

Step 1A: At a commissioning stage or during an initial system operation (learning phase), the electric motor 15 may be operated under different operating conditions or it may follow a power cycle dictated by the specific application at hand. A baseline model may be created by training it with data collected online. The baseline model may further be complemented by data from the self-tuned model 12, which provides missing inputs to the baseline model.

Step 1B: The temperatures from the available sensors 17₁,..., 17ᵢ,.., 17ₙ are recorded. At this stage, it may be possible to have more sensors attached and remove them after the learning phase. The temperatures may be recorded during the whole time, i.e., during steady state and transients, or, for instance, only during steady state. Optionally, in some embodiments the temperatures may be recorded only when the temperature is within set limits, i.e. when it varies less than a set interval, in order to obtain more reliable data. It is thus realized that the disclosed method can easily be adapted to different scenarios.

Step 1C: The operating point parameters (e.g. speed, current) are captured at each of the different operating conditions.

Step 1D: The datasets of Step 1B and Step 1C may be complemented with simulated data if it is possible for the particular electric motor type and size being examined.

Further, some of the outputs of the self-tuned model 12 may be inserted into a loss function of the machine learning model 11 for evaluating its performance, i.e., to evaluate how well the machine learning model 11 predicts the temperatures. The self-tuned model 12 may be seen as a mathematical representation that accounts for discrepancies between the simulation and the real operating conditions. This step is thus optional as it may be dependent on the particular type and/or size of electric motor, or more generally type of machine, being examined. The base thermal model has now been created.

STEP 2: The base machine learning model 11 of STEP 1 is updated and maintained partially or fully.

Step 2A: The electric motor operates by following the power cycle requested by the application. Additionally, it is possible to create the base machine learning model 11 while following a certain power cycle as requested (e.g. at the request of a customer).

Step 2B: The temperature at similar locations as those of Step 1B may be recorded during steady-state conditions as well as transients, however not necessarily at all locations. It may, for instance, be sufficient to measure the temperature at the electric motor shell if it was measured during the learning phase.

Step 2C: The operating point parameters (e.g. speed, current) are captured at the specific operating condition. It is noted that various operating conditions could be considered for use. As a particular example, only steady state conditions could be used or steady state and transients.

Step 2D: The machine learning model 11 is updated based on the measurements of the previous step; a partial update of the thermal model is also possible.
- Step i: Online: Use small subsets of training data (e.g. stochastic gradient descent).
- Step ii: Offline: Train the thermal model in batch mode (e.g. gradient descent).

STEP 3: The structure and weights of the updated machine learning model 11 are stored. The machine learning model 11 is used for estimating temperatures at locations without measurements or predict temperatures at a future point of time.

The above steps are only given as an exemplary set of embodiments in order to illustrate the method. Various combinations of the above steps are possible, as well as different combinations within a certain step; for instance, the machine learning model may be used alone or in combination with use of simulated data, or the machine learning model may be used in combination with a self-tuning model, or the power cycle of the machine 15 that is used can be adapted, etc.

The method as provided herein in various embodiments entails a number of advantages. As the number of connected systems increases, the development of data-driven models is becoming more attractive. The method entails various advantages such as, for instance, the fact that complex analytical or computational models are made obsolete. The thermal digital twin is enabled to adapt to new operating conditions without requiring human intervention, and it can be generalized for different machine types and applications.

Some operating conditions may differ from those during the learning phase (voltage, switching frequency), and therefore the machine learning model 11 should be kept continuously updated.

The method and means as described herein may replace both electromagnetic and thermal models. A thermal network and a machine learning model have the fastest responses (based on their complexity). The advantage of thermal networks is that they may remain highly accurate during the operation, but they need a human to modify them manually or adapt their parameters, if there is any important change. In contrast, with the machine learning model 11 (herein exemplified by neural network), these changes may be tracked automatically per each machine instance at the expense of some additional computation effort, but without human resources. For finite elements, it is even harder to update and run in parallel to the real object.

Instead of having the machine electrical characteristics as inputs, physically observed features could be used (e.g. iron losses, winding resistive losses, axial air flow coefficient, stator slot thermal conductivity, etc.). A few exemplary features for use in the development of the machine learning model are speed, iron losses, axial thermal conductivity of rotor core, resistive winding copper losses in stator core region, etc.

Automated machine learning (AutoML) may be used to decide the structure and parameters of the machine learning model (e.g. regressor type, number of nodes and layers, etc.). The machine learning model is not limited to neural networks but expanded to any regression method. The high degree of automation in AutoML allows non-experts to make use of machine learning models and techniques without requiring them to become experts in machine learning.

Automating the process of applying machine learning end-to-end additionally offers the advantages of producing simpler solutions, faster creation of those solutions, and models that often outperform hand-designed models. After using AutoML, the structure and parameters of the regressor may be selected automatically.

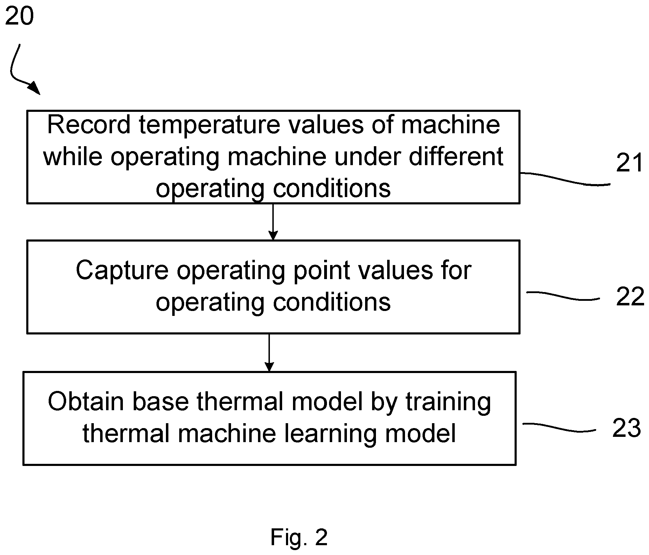

**Fig. 2** is a flowchart of various embodiments of a method 20 performed in a device, such as a cloud node, a node instance, a node, a server device, to mention a few examples. The method 20 maybe used for estimating internal and/or external temperatures of a machine 15, such as an electrical motor, by using a thermal digital twin 10 that replicates a temperature sensor 17ᵢ of the machine 15. The method 20 comprises recording 21 temperature values received from one or more temperature sensors of the machine 15 while operating the machine 15 under at least two different operating conditions.

The method 20 comprises capturing 22 one or more operating point parameters for each of the different operating conditions. A few examples on such operating point parameters comprise speed, current, voltage, temperature, and surrounding atmospheric conditions. It is noted that this is just a set of examples, and that various other operating parameter may be used instead or in addition.

The method 20 further comprises obtaining 23 a base thermal model for the thermal digital twin 10 by training the thermal machine learning model 11 using the recorded temperatures and the captured one or more operating point parameters. The training further comprises using input from a self-tuning analytical model 12. The herein provided machine learning model-based thermal digital twin makes it possible to directly relate the operating point with the thermal behaviour of machine 15.

In an embodiment, the method 20 comprises creating, for the thermal digital twin 10, a base thermal model. The method 20 may further comprise storing a structure and weights for each base thermal model.

In various embodiments, the method 20 comprises relating an operating point parameter with the thermal behaviour of the machine 15.

In various embodiments, the training of the thermal machine learning model 11 further comprises using simulated data.

In various embodiments, the method 20 comprises updating the base thermal model for the thermal digital twin 10. This is done by recording, while operating the machine 15 during a power cycle thereof, temperatures received from the one or more temperature sensors of the machine 15. In variations of this set of embodiments, the updating of the thermal base model can be performed partially or fully, e.g. depending on available time, resources or assessed need of either.

In various embodiments, the self-tuning analytical model 12 and the thermal machine learning model 11 are connected in series.

In various embodiments, the method 20 comprises using an automatic machine learning method for defining a structure of the thermal machine learning model 11. In variations of this set of embodiments, the method 20 comprises storing the structure and weights of the thermal machine learning model 11.

In various embodiments, the method 20 comprises providing missing inputs to the thermal machine learning model 11 from the self-tuning analytical thermal model 12.

In various embodiments, the thermal machine learning model 11 comprises multiple layers and nodes.

In various embodiments, the method 20 comprises using a self-tuned thermal model, whereby the thermal digital twin is self-adapting.

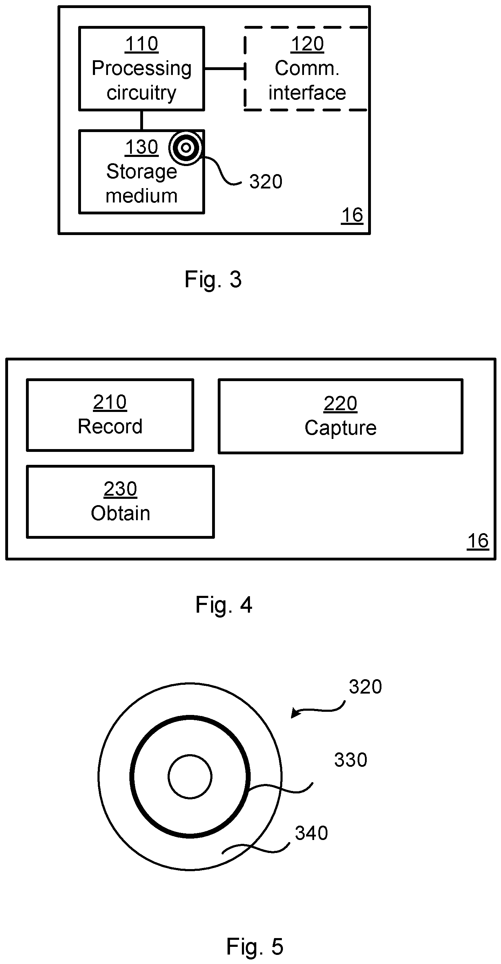

**Fig. 3** schematically illustrates, in terms of a number of functional units, the components of a device 16 according to an embodiment. Processing circuitry 110 is provided using any combination of one or more of a suitable central processing unit (CPU), multiprocessor, microcontroller, digital signal processor (DSP), etc. capable of executing software instructions stored in a computer program product 320 (as in Fig. 5), e.g. in the form of a storage medium 130. The processing circuitry 110 may further be provided as at least one application specific integrated circuit (ASIC), or field programmable gate array (FPGA). Particularly, the processing circuitry 110 is configured to cause the device 16 to perform a set of operations, or actions, as disclosed above. For example, the storage medium 130 may store the set of operations, and the processing circuitry 110 may be configured to retrieve the set of operations from the storage medium 130 to cause the device 16 to perform the set of operations. The set of operations may be provided as a set of executable instructions. The processing circuitry 110 is thereby arranged to execute methods as herein disclosed.

The storage medium 130 may also comprise persistent storage, which, for example, can be any single one or combination of magnetic memory, optical memory, solid state memory or even remotely mounted memory.

The device 16 may further comprise a communications interface 120 for communications with other entities, functions, nodes, and devices, over suitable interfaces. As such the communications interface 120 may comprise one or more transmitters and receivers, comprising analogue and digital components.

The processing circuitry 110 controls the general operation of the device 16 e.g. by sending data and control signals to the communications interface 120 and the storage medium 130, by receiving data and reports from the communications interface 120, and by retrieving data and instructions from the storage medium 130. Other components, as well as the related functionality, of the device 16 are omitted in order not to obscure the concepts presented herein.

**Fig. 4** schematically illustrates, in terms of a number of functional modules, the components of a device 16 according to an embodiment. The device 16 of Fig. 4 comprises a number of functional modules; a record module 210 configured to record temperatures received from one or more temperature sensors of the machine while operating the machine under at least two different operating conditions, a capture module 220 configured to capture one or more operating point parameters for each different operating condition, and an obtain module 230, configured to obtain a base thermal model for the thermal digital twin by training a thermal machine learning model by using recorded temperatures and the captured operating point parameter(s), and by using input from a self-tuning analytical model. The device 16 of Fig. 4 may further comprise a number of optional functional modules. In general terms, each functional module 210 - 230 may be implemented in hardware or in software. Preferably, one or more or all functional modules 210 - 230 may be implemented by the processing circuitry 110, possibly in cooperation with the communications interface 120 and the storage medium 130. The processing circuitry 110 may thus be arranged to from the storage medium 130 fetch instructions as provided by a functional module 210 - 230 and to execute these instructions, thereby performing any actions of the device 16 as disclosed herein.

**Fig. 5** shows one example of a computer program product 320 comprising computer readable means 340. On this computer readable means 340, a computer program 330 can be stored, which computer program 330 can cause the processing circuitry 110 and thereto operatively coupled entities and devices, such as the communications interface 120 and the storage medium 130, to execute methods according to embodiments described herein. The computer program 330 and/or computer program product 320 may thus provide means for performing any actions of the device 16 as herein disclosed.

In the example of Fig. 5, the computer program product 320 is illustrated as an optical disc, such as a CD (compact disc) or a DVD (digital versatile disc) or a Blu-Ray disc. The computer program product 320 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 330 is here schematically shown as a track on the depicted optical disk, the computer program 330 can be stored in any way which is suitable for the computer program product 320.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method (20) for estimating temperatures of a machine (15) using a thermal digital twin (10) replicating a temperature sensor (17ᵢ) of the machine (15), the method (20) being performed in a device (16) and comprising:
- recording (21) temperature values received from one or more temperature sensors (17ᵢ) of the machine (15) while operating the machine (15) under at least two different operating conditions,
- capturing (22) one or more operating point parameters for each of the different operating conditions,
- obtaining (23) a base thermal model for the thermal digital twin (10) by:
- training a thermal machine learning model (11) by using the recorded temperature values and the captured one or more operating point parameters, the training further comprising using input from a self-tuning analytical model (12).

2. The method (20) as claimed in claim 1, comprising creating, for the thermal digital twin (10), a base thermal model, and storing a structure and weights for each base thermal model.

3. The method (20) as claimed in any of the preceding claims, comprising relating an operating point parameter with the thermal behaviour of the machine (15).

4. The method (20) as claimed in any of the preceding claims, wherein the training further comprises providing simulated data.

5. The method (20) as claimed in any of the preceding claims, comprising updating the base thermal model for the thermal digital twin (10) by recording, while operating the machine (15) during a power cycle thereof, temperatures received from the one or more temperature sensors of the machine (15).

6. The method (20) as claimed in any of the preceding claims, comprising providing missing inputs to the thermal machine learning model (11) from the self-tuning analytical thermal model (12).

7. A device (16) for estimating temperatures of a machine (15) using a thermal digital twin (10) replicating a temperature sensor (17ᵢ) of the machine (15), the device (16) being configured to:
- record temperature values received from one or more temperature sensors of the machine (15) while operating the machine (15) under at least two different operating conditions,
- capture one or more operating point parameters for each of the different operating conditions,
- obtain a base thermal model for the thermal digital twin (10) by training a thermal machine learning model (11) using the recorded temperatures and the captured one or more operating point parameters, and input from a self-tuning analytical model (12).

8. The device (16) as claimed in claim 7, configured to:
- create, for the thermal digital twin (10), a base thermal model, and
- store a structure and weights for each base thermal model.

9. The device (16) as claimed in claim 7 or 8, configured to relate an operating point parameter with the thermal behaviour of the machine (15).

10. The device (16) as claimed in any of claims 7 - 9, configured to train by further using simulated data.

11. The device (16) as claimed in any of claims 7 - 10, configured to update the base thermal model for the thermal digital twin (10) by recording temperatures received from the one or more temperature sensors of the machine (15) during a power cycle of the machine (15).

12. The device (16) as claimed in any of claims 7 - 11, configured to provide missing inputs to the thermal machine learning model (11) from the self-tuning analytical thermal model (12).

13. Use of a device (16) according to any of claims 7 - 12, for alerting a user of the machine (15) on any deviation from anticipated temperatures.

14. A computer program (330) for estimating temperatures of a machine (15) using a thermal digital twin (10) replicating a temperature sensor (17ᵢ) of the machine (15), the computer program comprising computer code which, when run on processing circuitry (11) of a device (10) causes the device to:
- record temperature values received from one or more temperature sensors of the machine (15) while operating the machine (15) under at least two different operating conditions,
- capture one or more operating point parameters for each of the different operating conditions,
- obtain a base thermal model for the thermal digital twin (10) by training the thermal machine learning model (11) by using the recorded temperatures and the captured one or more operating point parameters, the training further comprising using input from a self-tuning analytical model (12).

15. A computer program product (120) comprising a computer program (100) according to claim 14, and a computer readable storage medium (130) on which the computer program (100) is stored.
